# EUROPEAN PATENT APPLICATION

(11) **EP 4 517 486 A1**
(43) Date of publication of application: **05.03.2025**
(21) Application number: 24184103.0
(22) Date of filing: 24.06.2024
(51) Int. Cl.: G06F 1/324, G06F 1/04, G06N 20/00

(54) **METHODS AND APPARATUS TO PERFORM CLOUD-BASED ARTIFICIAL INTELLIGENCE OVERCLOCKING**

(30) Priority: 31.08.2023 US 202318241062
(71) Applicant: INTEL Corporation, Santa Clara, CA 95054 (US)
(72) Inventor: ZHU, Xia, Santa Clara 95054 (US); ZHU, Jianfang, Santa Clara 95054 (US); KIM, Taeyoung, Santa Clara 95054 (US); RAGLAND, Daniel J., Santa Clara 95054 (US); RODRIGUEZ, Rodny, Santa Clara 95054 (US); DRAGHI, Louis, Santa Clara 95054 (US); FIFE, Matthew Paul, Santa Clara 95054 (US); XIE, Jason Xili, Santa Clara 95054 (US)
(74) Representative: Rummler, Felix

(57) **Abstract**

Systems, apparatus, articles of manufacture, and methods to perform cloud-based artificial intelligence overclocking are disclosed that, collect workload information, the workload information representing a workload to be executed by the first compute platform, cause generation of an output from an AI model based on the workload information, the output representing an overclocking frequency value to be used for operation of the first compute platform, and performing overclocking based on the overclocking frequency value.

## Description

### FIELD OF THE DISCLOSURE

This disclosure relates generally to computer architecture and, more particularly, to methods and apparatus to perform cloud-based artificial intelligence overclocking.

### BACKGROUND

Computers operate by executing instructions at a clock frequency. Such clock frequency is determined by a manufacturer of the computer and/or parts thereof. Some computers can be overclocked, which causes the instructions to be executed at a higher frequency than the frequency specified by the manufacturer. Such overclocking may increase the performance of the computer.

### BRIEF DESCRIPTION OF THE DRAWINGS

FIG. 1 is a block diagram of an example environment in which example overclocking circuitry operates to perform overclocking based on artificial intelligence models generated by a model generator circuitry.
FIG. 2A is a block diagram of an example implementation of the overclocking circuitry of FIG. 1.
FIG. 2B is a block diagram of an example implementation of the model generator circuitry of FIG. 1.
FIG. 3 is a block diagram illustrating generation of one or more AI models based on information collected by the overclocking circuitry of FIG. 1, the AI models generated by model generator circuitry of FIG. 1.
FIG. 4 is a flowchart representative of example machine readable instructions and/or example operations that may be executed, instantiated, and/or performed by example programmable circuitry to implement the overclocking circuitry of FIG. 2A to generate system telemetry data.
FIG. 5 is a flowchart representative of example machine readable instructions and/or example operations that may be executed, instantiated, and/or performed by example programmable circuitry to implement the model generator circuitry of FIG. 2B to train a plurality of AI models.
FIG. 6 is a flowchart representative of example machine readable instructions and/or example operations that may be executed, instantiated, and/or performed by example programmable circuitry to implement the overclocking circuitry of FIG. 2A to perform overclocking of a compute platform.
FIG. 7 is a graph illustrating example overclocking results.
FIG. 8 is a block diagram of an example processing platform including programmable circuitry structured to execute, instantiate, and/or perform the example machine readable instructions and/or perform both the example operations of FIGS. 4 and 6 to implement the overclocking circuitry of FIG. 2A and the example operations of FIG. 5 to implement the model generator circuitry of FIG. 2B.
FIG. 9 is a block diagram of an example implementation of the programmable circuitry of FIG. 8.
FIG. 10 is a block diagram of another example implementation of the programmable circuitry of FIG. 8.

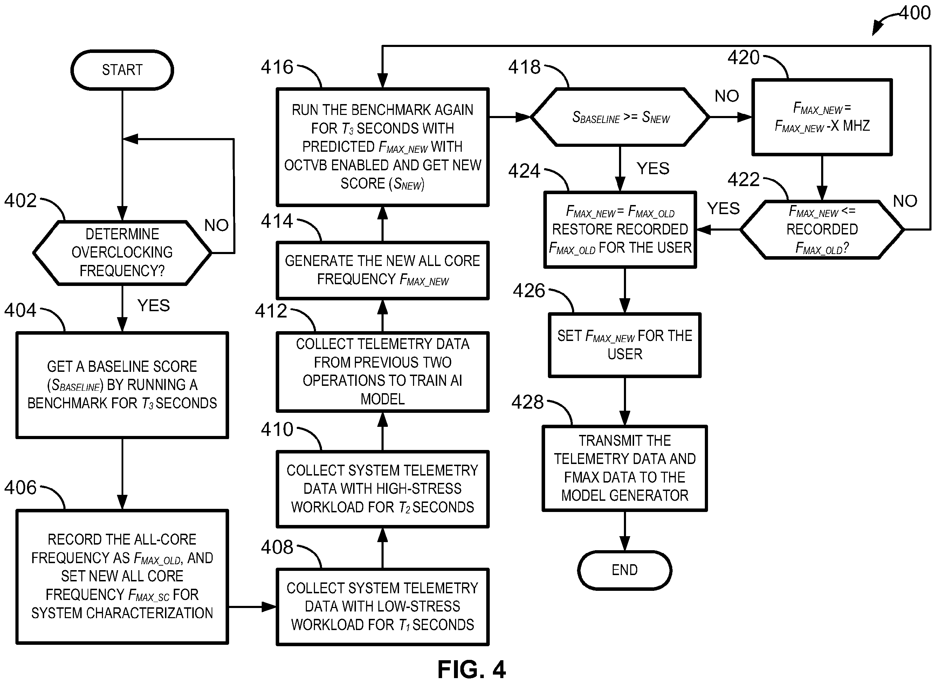

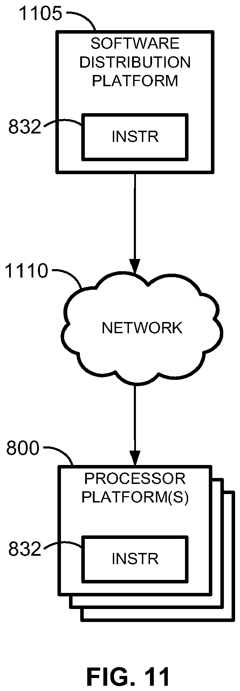

FIG. 11 is a block diagram of an example software/firmware/instructions distribution platform (e.g., one or more servers) to distribute software, instructions, and/or firmware (e.g., corresponding to the example machine readable instructions of FIGS. 4-6) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified in the below description.

As used herein "substantially real time" refers to occurrence in a near instantaneous manner recognizing there may be real world delays for computing time, transmission, etc. Thus, unless otherwise specified, "substantially real time" refers to real time + 1 second.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example an integrated circuit may be implemented as one or more of an ASIC, an FPGA, a chip, a microchip, programmable circuitry, a semiconductor substrate coupling multiple circuit elements, a system on chip (SoC), etc.

### DETAILED DESCRIPTION

When overclocking, the processor of a central processing unit (CPU) is operated at a clock rate that is higher than the clock frequency specified by a manufacturer of a compute device. By increasing the clock rate of the processor of the compute device, the compute device is able to execute additional operations per second, thereby improving the efficiency of the compute device. However, in some instances, by increasing the clock rate of the processor of the compute device to a level that is higher than the manufacturer specified clock frequency, the compute device might malfunction. Therefore, there is an overclocking frequency that is higher than the manufacturer specified clock frequency that increases the performance of the compute device without being significantly higher than the manufacturer specified clock frequency which causes the compute device to overheat and/or otherwise malfunction.

Traditional overclocking techniques utilize a try-and-fail approach. The traditional overclocking techniques start by increasing CPU frequency and voltage by a small amount, and then executing a workload. If the compute device is stable, then the traditional overclocking technique further increases the CPU frequency and voltage and executes another workload. If the compute device is unstable, then the traditional overclocking technique stops the process and records the maximum CPU frequency when the compute device is stable as the overclocking frequency.

However, the traditional overclocking techniques is a time-consuming and tedious process that requires knowledge about central processing units and physics. In addition, while consumers prefer higher performance from the compute devices, consumers generally prefer stable compute devices more the higher performance. In other words, such consumers prefer an overclocking technique that is easy, reliable, and stable.

The techniques disclosed herein use artificial intelligence models to predict overclocking frequencies for a compute device. Artificial intelligence (AI), including machine learning (ML), deep learning (DL), and/or other artificial machine-driven logic, enables machines (e.g., computers, logic circuits, etc.) to use a model to process input data to generate an output based on patterns and/or associations previously learned by the model via a training process. For instance, the model may be trained with data to recognize patterns and/or associations and follow such patterns and/or associations when processing input data such that other input(s) result in output(s) consistent with the recognized patterns and/or associations.

In general, implementing a ML/AI system involves two phases, a learning/training phase and an inference phase. In the learning/training phase, a training algorithm is used to train a model to operate in accordance with patterns and/or associations based on, for example, training data. In general, the model includes internal parameters that guide how input data is transformed into output data, such as through a series of nodes and connections within the model to transform input data into output data. Additionally, hyperparameters are used as part of the training process to control how the learning is performed (e.g., a learning rate, a number of layers to be used in the machine learning model, etc.). Hyperparameters are defined to be training parameters that are determined prior to initiating the training process.

Different types of training may be performed based on the type of ML/AI model and/or the expected output. For example, supervised training uses inputs and corresponding expected (e.g., labeled) outputs to select parameters (e.g., by iterating over combinations of select parameters) for the ML/AI model that reduce model error. As used herein, labelling refers to an expected output of the machine learning model (e.g., a classification, an expected output value, etc.) Alternatively, unsupervised training (e.g., used in deep learning, a subset of machine learning, etc.) involves inferring patterns from inputs to select parameters for the ML/Al model (e.g., without the benefit of expected (e.g., labeled) outputs).

In examples disclosed herein, ML/AI models are trained using stochastic gradient descent. However, any other training algorithm may additionally or alternatively be used. In examples disclosed herein, training is performed until a performance of the ML/AI model exceeds a threshold. In some examples, training is performed until an error associated with the ML/AI model is reduced to a certain amount. In examples disclosed herein, training is performed at a local, individual, remote computing device. In some examples, training is performed remotely at a training facility (e.g., model generator circuitry). Training is performed using hyperparameters that control how the learning is performed (e.g., a learning rate, a number of layers to be used in the machine learning model, etc.).

Training is performed using training data. In examples disclosed herein, the training data originates from compute platforms. For example, the training data may be based on system telemetry data. The system telemetry data may include temperature data, voltage data, frequency data, and power data. The system telemetry data may be based on using either one core of the compute platform or multiple cores of the compute platform. In some examples, the system telemetry data is based on (e.g., sourced from) other compute platforms that are in communication with the first compute platform.

Once training is complete, the model is deployed for use as an executable construct that processes an input and provides an output based on the network of nodes and connections defined in the model. The model is stored at the compute platforms and/or a model generation facility. The model may then be executed by the compute platforms (and/or by the model generation facility) to determine the overclocking frequency for use at the compute platform.

Once trained, the deployed model may be operated in an inference phase to process data. In the inference phase, data to be analyzed (e.g., live data) is input to the model, and the model executes to create an output. This inference phase can be thought of as the AI "thinking" to generate the output based on what it learned from the training (e.g., by executing the model to apply the learned patterns and/or associations to the live data). In some examples, input data undergoes pre-processing before being used as an input to the machine learning model. Moreover, in some examples, the output data may undergo post-processing after it is generated by the AI model to transform the output into a useful result (e.g., a display of data, an instruction to be executed by a machine, etc.).

In some examples, output of the deployed model may be captured and provided as feedback. By analyzing the feedback, an accuracy of the deployed model can be determined. If the feedback indicates that the accuracy of the deployed model is less than a threshold or other criterion, training of an updated model can be triggered using the feedback and an updated training data set, hyperparameters, etc., to generate an updated, deployed model.

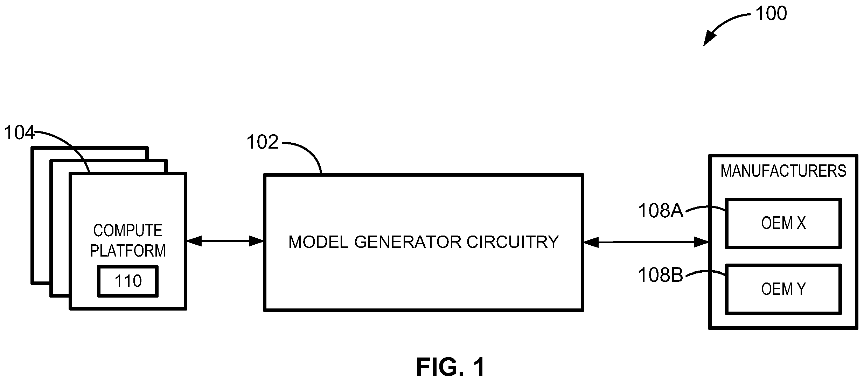

FIG. 1 is a block diagram of an example environment 100 including an example model generator circuitry 102, example compute platforms 104, and example manufacturers 108. In the illustrated example of FIG. 1, overclocking circuitry 110 is implemented at each compute platform 104. In the illustrated example of FIG. 1, the manufacturers 108 represents multiple manufacturers including, for example, a first example manufacturer 108A (e.g., OEM X), and a second example manufacturer 108B (e.g., OEM Y). While in the illustrated example of FIG. 1, the example overclocking circuitry 110 is implemented at the compute platforms 104 (e.g., an end user device, laptop, gaming desktop, etc.), in some examples, the example overclocking circuitry 110 may be additionally or alternatively be implemented at another location such as, for example, by the example model generator circuitry 102.

The example model generator circuitry 102 is to design, publish, and/or generate an overclocking model for use by overclocking circuitry implemented at the compute platforms 104. In the example of FIG. 1, the example model generator circuitry 102 is implemented at a server and/or a plurality of servers (e.g., a cloud). Such model generator circuitry 102 may be operated by one or more entities such as, for example, Intel Corporation, to facilitate deployment of overclocking models. The generated overclocking model (e.g., global overclocking model, published overclocking model, deployed overclocking model, base overclocking model, etc.) is to be provided (e.g., accessed, retrieved, stored, downloaded) to an individual compute platform 104 before being run (e.g., be executed) on the individual compute platform 104 (e.g., by the overclocking circuitry 110). The downloaded overclocking model is used by overclocking circuitry 110 at each individual compute platform 104 (e.g., end user device) to determine an overclocking frequency to use with the individual compute platform 104. For example, the overclocking circuitry 110 of a first compute platform 104 may determine that the first compute platform 104 can perform at a higher frequency which improves performance of the first one of the compute platforms 104, as compared to a second one of the compute platforms 104.

The example compute platform 104 (e.g., an end user device) generates system telemetry data (e.g., voltage data, temperature data) based on the execution of various workloads. The example system telemetry data is accessed by the overclocking circuitry 110, which may use the telemetry data from the compute platform 104 in connection with the overclocking model received from the example model generator circuitry 102. In some examples, the overclocking circuitry 110 transmits the telemetry data to the example model generator circuitry 102, so that the example model generator circuitry 102 can update the generated overclocking model (e.g., global overclocking model, standard overclocking model, base overclocking model) before the generated overclocking model is subsequently trained with the telemetry data and deployed to each of the compute platforms 104.

The example overclocking circuitry 110 is to determine a core frequency for execution on the first compute platform. The core frequency data can be transmitted to the example manufacturers 108 (e.g., a first manufacturer 108A (e.g., OEM X), and a second manufacturer 108B (e.g., OEM Y)). The example manufacturers 108 can use the core frequency data to design, build, and pre-install the core frequency into manufactured compute platforms.

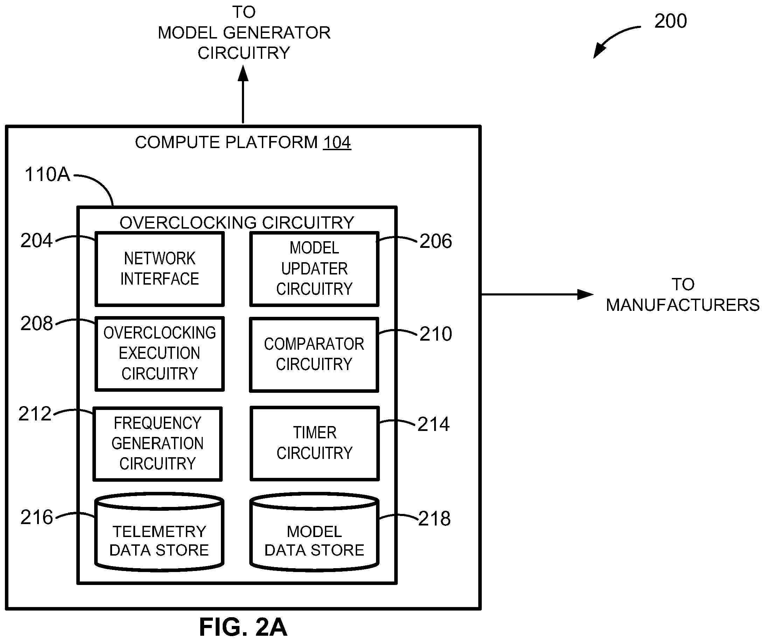

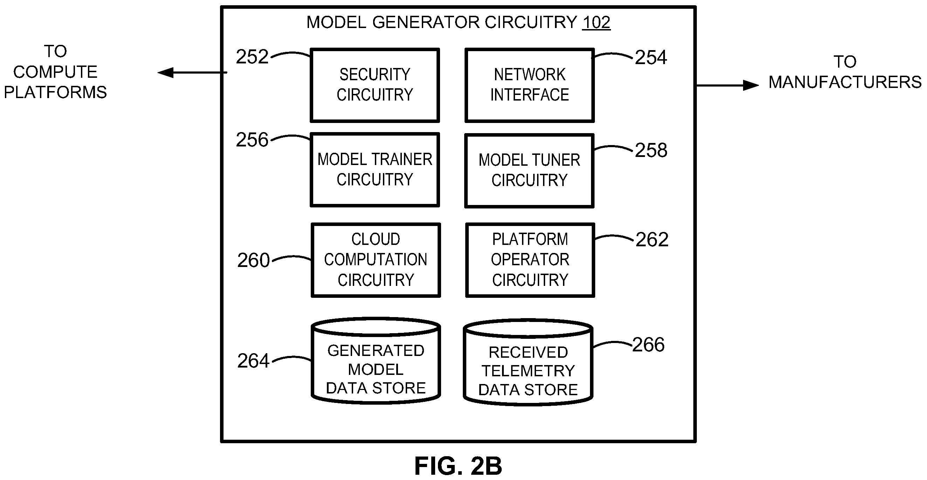

FIG. 2A includes is a block diagram 200 of an example implementation of the overclocking circuitry 110 of FIG. 1 to perform artificial intelligence model based overclocking of a compute platform. The example overclocking circuitry 110 of FIG. 2 may be instantiated (e.g., creating an instance of, bring into being for any length of time, materialize, implement, etc.) by programmable circuitry such as a Central Processor Unit (CPU) executing first instructions. Additionally or alternatively, the example overclocking circuitry 110 of FIG. 2A may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 2A may, thus, be instantiated at the same or different times. Some or all of the circuitry of FIG. 2A may be instantiated, for example, in one or more threads executing concurrently on hardware and/or in series on hardware. Moreover, in some examples, some or all of the circuitry of FIG. 2A may be implemented by microprocessor circuitry executing instructions and/or FPGA circuitry performing operations to implement one or more virtual machines and/or containers.

FIG. 2A includes the example overclocking circuitry 110 of FIG. 1. The example overclocking circuitry 110 includes an example network interface 204, example model updater circuitry 206, example overclocking execution circuitry 208, example comparator circuitry 210, example frequency generation circuitry 212, example timer circuitry 214, an example telemetry data store 216, and an example model data store 218.

The example network interface 204 of the overclocking circuitry 110 transmits the system telemetry data for the respective compute platform to the example model generator circuitry 102 (FIG. 1). For example, the network interface 204 accesses the system telemetry data which is stored in the telemetry data store 216 of the compute platform 104. In some examples, the network interface 204 transmits the determined overclocking frequency to the example model generator circuitry 102 (FIG. 1) in the cloud and the manufacturers 108 (FIG. 1). The example network interface 204 may communicate with the model generator circuitry 102 (FIG. 1) and/or the manufacturers 108 (FIG. 1) by using a Wi-FI connection, Bluetooth connection, an Ethernet connection, a digital subscriber line (DSL) connection, a telephone line connection, a coaxial cable system, a satellite system, a line-of-site wireless system, a cellular telephone system, an optical connection, etc. to transmit the system telemetry data or the overclocking frequencies.

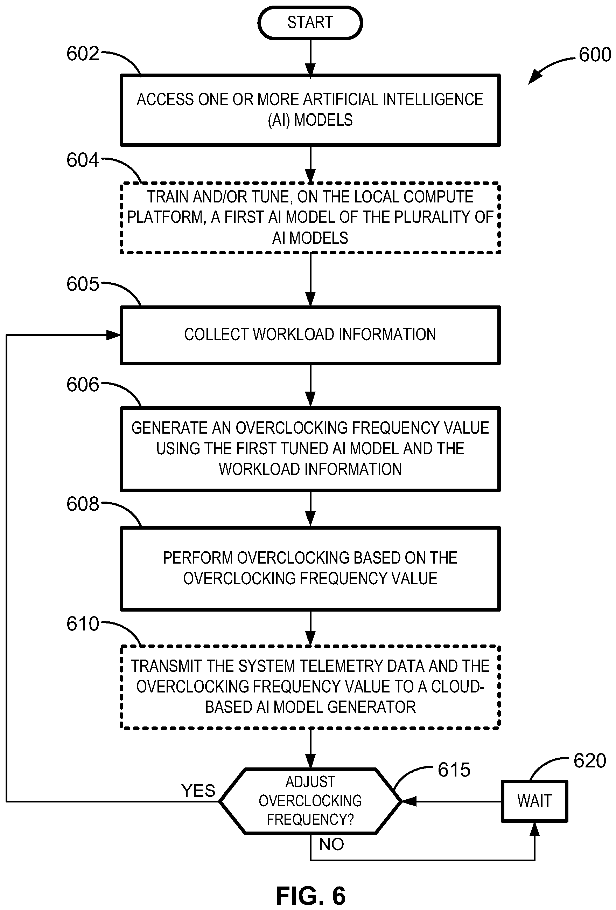

In some examples, the network interface 204 is instantiated by programmable circuitry executing network interface instructions and/or configured to perform operations such as those represented by the flowcharts of FIGS. 4 and 6.

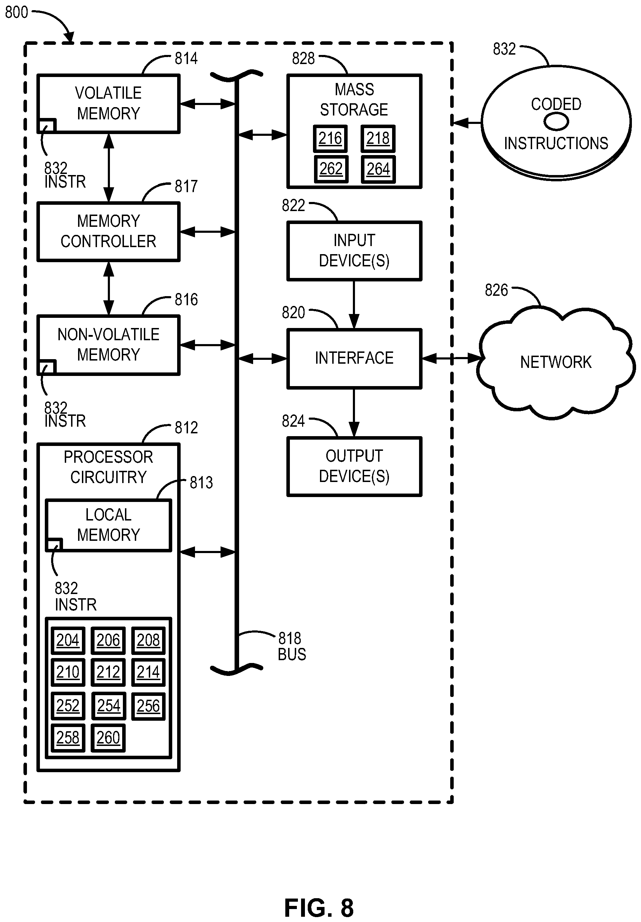

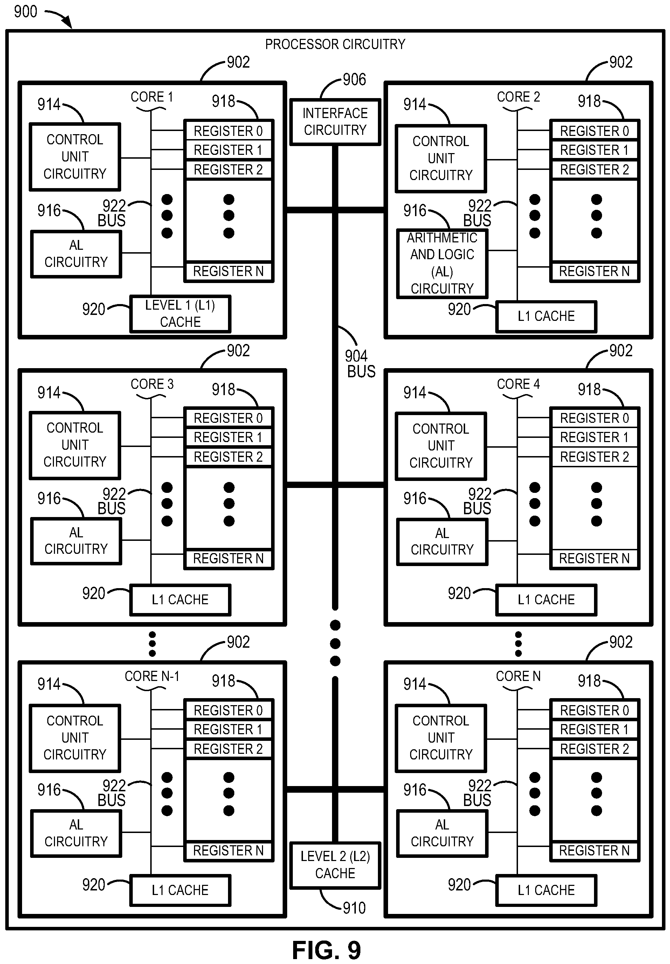

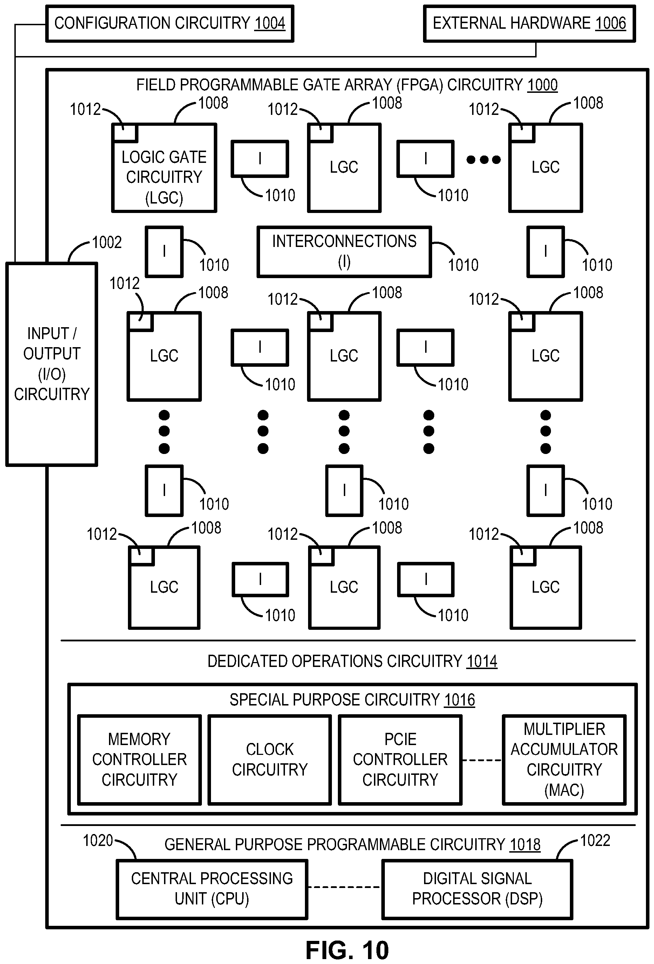

In some examples, the overclocking circuitry 110 includes means for transmitting system telemetry data and overclocking frequency values. For example, the means for transmitting may be implemented by a network interface 204. In some examples, the network interface 204 may be instantiated by programmable circuitry such as the example programmable circuitry 812 of FIG. 8. For instance, the network interface 204 may be instantiated by the example microprocessor 900 of FIG. 9 executing machine executable instructions such as those implemented by at least block 428 of FIG. 4, and blocks 602 and 610 of FIG. 6. In some examples, the network interface 204 may be instantiated by hardware logic circuitry, which may be implemented by an ASIC, XPU, or the FPGA circuitry 1000 of FIG. 10 configured and/or structured to perform operations corresponding to the machine readable instructions. Additionally or alternatively, the network interface 204 may be instantiated by any other combination of hardware, software, and/or firmware. For example, the network interface 204 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The example model updater circuitry 206 is to update the plurality of AI models received from the model generator circuitry 102 (FIG. 1). The example model updater circuitry 206 is to update the local AI models by training and/or tuning the AI models with low-stress data, high-stress data, various core frequencies, and system telemetry data. The example model updater circuitry 206 may replace (e.g., update, overwrite, etc.) a first AI model with a second AI model based on the respective performances of the AI models. The example model updater circuitry 206 may store the selected AI model in the example model data store 218. In some examples, the functionality of the example model trainer circuitry 256 (FIG. 2B) of the model generator circuitry 102 (FIG. 1) and the example model tuner circuitry 258 (FIG. 2B) of the model generator circuitry 102 (FIG. 1) is implemented by the example model updater circuitry 206.

In some examples, the model updater circuitry 206 is instantiated by programmable circuitry executing model updater instructions and/or configured to perform operations such as those represented by the flowchart of FIGS. 4 and 6.

In some examples, the overclocking circuitry 110 includes means for updating artificial intelligence (AI) models. For example, the means for updating AI models may be implemented by model updater circuitry 206. In some examples, the model updater circuitry 206 may be instantiated by programmable circuitry such as the example programmable circuitry 812 of FIG. 8. For instance, the model updater circuitry 206 may be instantiated by the example microprocessor 900 of FIG. 9 executing machine executable instructions such as those implemented by at least block 412 of FIG. 4 and block 604 of FIG. 6. In some examples, the model updater circuitry 206 may be instantiated by hardware logic circuitry, which may be implemented by an ASIC, XPU, or the FPGA circuitry 1000 of FIG. 10 configured and/or structured to perform operations corresponding to the machine readable instructions. Additionally or alternatively, the model updater circuitry 206 may be instantiated by any other combination of hardware, software, and/or firmware. For example, the model updater circuitry 206 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The example overclocking execution circuitry 208 is to perform the overclocking of the individual compute platform 104. The example overclocking execution circuitry 208 is to control the various hardware aspects of the computing platform 104 to perform the overclocking. For example, the overclocking execution circuitry 208 can set the frequency value of the CPU, set the voltage value by using a voltage controlled oscillator (VCO), or set the temperature value by using a plurality of fans to cool the computing platform. By performing the overclocking, the overclocking execution circuitry 208 may set the frequency value of the individual compute platform 104 based on the overclocking frequency determined by the frequency generation circuitry 212.

In some examples, the overclocking execution circuitry 208 runs workloads on the individual compute platform to determine system telemetry (e.g., voltage data, temperature data, power data, etc.). As used herein, the workloads may be classified as either low-stress workloads (e.g., light workloads, light-weighted workload) or high-stress workloads (e.g., heavy workloads, heavy-weighted workload). For example, the workloads may be classified based on an average amount of processor cycles associated with the workload. The individual compute platform may perform better with a first core frequency if the low-stress workload (e.g., the workload classified as a workload with lower stress than a workload classified with high stress) is being executed or a second core frequency if the high-stress workload is being executed. In addition, a core frequency may cause the individual compute platform to perform better if multiple workloads are being executed. The example overclocking execution circuitry 208 may perform operation at the different core frequencies for various amounts of time. The example overclocking execution circuitry 208 may use the example timer circuitry 214 to determine how much time has elapsed. In some examples, the overclocking execution circuitry 208 may receive an instruction from the example platform operator circuitry 262 (FIG. 2B) of the example model generator circuitry 102 (FIG. 1) which causes the overclocking execution circuitry 208 to either perform workload testing or overclocking (e.g., setting a frequency value, a voltage value, maintaining a temperature, etc.).

In some examples, the overclocking execution circuitry 208 is instantiated by programmable circuitry executing overclocking execution instructions and/or configured to perform operations such as those represented by the flowcharts of FIGS. 4 and 6.

In some examples, the overclocking circuitry 110 includes means for performing overclocking on a first machine. For example, the means for performing overclocking may be implemented by overclocking execution circuitry 208. In some examples, the overclocking execution circuitry 208 may be instantiated by programmable circuitry such as the example programmable circuitry 812 of FIG. 8. For instance, the overclocking execution circuitry 208 may be instantiated by the example microprocessor 900 of FIG. 9 executing machine executable instructions such as those implemented by at least blocks 402, 404, 406, 408, 410, 416, 420, 424, and 426 of FIG. 4, and blocks 608, 615, 620 of FIG. 6. In some examples, the overclocking execution circuitry 208 may be instantiated by hardware logic circuitry, which may be implemented by an ASIC, XPU, or the FPGA circuitry 1000 of FIG. 10 configured and/or structured to perform operations corresponding to the machine readable instructions. Additionally or alternatively, the overclocking execution circuitry 208 may be instantiated by any other combination of hardware, software, and/or firmware. For example, the overclocking execution circuitry 208 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The example comparator circuitry 210 is to compare the performances corresponding to different ones of the AI models. In such examples, the comparator circuitry 210 may compare the features of the different AI models in addition to the performance of the AI models. For example, a first AI model for predicting the overclocking frequency may only have two inputs, while a second AI model may have twenty inputs. In such an example, the comparator circuitry 210 may determine the performance of the two AI models and determine to use the first AI model with only two inputs if the performance of the two AI models is similar. In certain examples, a threshold of similarity may be based on percentage points in a balanced accuracy metric (e.g., 0.3%, 2%, 10%). In some examples, the comparator circuitry 210 compares different frequency values to determine if a second overclocking frequency (e.g., current overclocking frequency, new overclocking frequency) is different from a first overclocking frequency (e.g., previous overclocking frequency, old overclocking frequency).

In some examples, the comparator circuitry 210 is instantiated by programmable circuitry executing comparator instructions and/or configured to perform operations such as those represented by the flowchart of FIG. 4.

In some examples, the overclocking circuitry 110 includes means for comparing the performance of different AI models. For example, the means for comparing may be implemented by comparator circuitry 210. In some examples, the comparator circuitry 210 may be instantiated by programmable circuitry such as the example programmable circuitry 812 of FIG. 8. For instance, the comparator circuitry 210 may be instantiated by the example microprocessor 900 of FIG. 9 executing machine executable instructions such as those implemented by at least blocks 418 and 422 of FIG. 4. In some examples, the comparator circuitry 210 may be instantiated by hardware logic circuitry, which may be implemented by an ASIC, XPU, or the FPGA circuitry 1000 of FIG. 10 configured and/or structured to perform operations corresponding to the machine readable instructions. Additionally or alternatively, the comparator circuitry 210 may be instantiated by any other combination of hardware, software, and/or firmware. For example, the comparator circuitry 210 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The example frequency generation circuitry 212 is to generate (e.g., compute) an overclocking frequency value. In some examples, the frequency generation circuitry 212 generates the overclocking frequency value by performing inference to predict the overclocking frequency value. In such examples, the frequency generation circuitry 212 performs the inference with AI models that have previously been trained and/or tuned by the example model generator circuitry 102 (FIG. 1). In some examples, the frequency generation circuitry 212 transmits data to the model generator circuitry 102 (FIG. 1) and instructs the cloud computation circuitry 260 (FIG. 2B) of the model generator circuitry 102 to perform the inference to predict the overclocking frequency value. In such examples, the model generator circuitry 102 transmits the final value to the frequency generation circuitry 212 of the overclocking circuitry 110 of the compute platform 104. In some examples, the example model updater circuitry 206 updates the received AI model with the telemetry data of the individual compute platform 104. In such examples, the frequency generation circuitry 212 performs the inference with the updated model.

For example, the example frequency generation circuitry 212 may determine that the overclocking frequency value is between 5.5GHz (five point five gigahertz) and 5.7GHz (five point seven gigahertz). In other examples, the frequency generation circuitry 212 may determine that the overclocking frequency value is dependent on the type of workload that the individual compute platform 104 is to execute (e.g., a low-stress workload, a high-stress workload).

In some examples, the frequency generation circuitry 212 is instantiated by programmable circuitry executing frequency generation instructions and/or configured to perform operations such as those represented by the flowchart of FIGS. 4 and 6.

In some examples, the overclocking circuitry 110 includes means for performing inference. For example, the means for performing inference may be implemented by frequency generation circuitry 212. In some examples, the frequency generation circuitry 212 may be instantiated by programmable circuitry such as the example programmable circuitry 812 of FIG. 8. For instance, the frequency generation circuitry 212 may be instantiated by the example microprocessor 900 of FIG. 9 executing machine executable instructions such as those implemented by at least blocks 605 and 606 of FIG. 6. In some examples, the frequency generation circuitry 212 may be instantiated by hardware logic circuitry, which may be implemented by an ASIC, XPU, or the FPGA circuitry 1000 of FIG. 10 configured and/or structured to perform operations corresponding to the machine readable instructions. Additionally or alternatively, the frequency generation circuitry 212 may be instantiated by any other combination of hardware, software, and/or firmware. For example, the frequency generation circuitry 212 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The example timer circuitry 214 is to determine the amount of time that has elapsed when the example overclocking execution circuitry 208 performs the workload testing on the compute platform 104. For example, the timer circuitry 214 may determine that a first workload is executed by the overclocking execution circuitry 208 for a total of five seconds, while a second workload is executed by the overclocking execution circuitry 208 for a total of seven seconds.

In some examples, the timer circuitry 214 is instantiated by programmable circuitry executing timer instructions and/or configured to perform operations such as those represented by the flowchart of FIG. 4.

In some examples, the overclocking circuitry 110 includes means for determining an amount of time that a workload is executed by the compute platform. For example, the means for determining an amount of time may be implemented by timer circuitry 214. In some examples, the timer circuitry 214 may be instantiated by programmable circuitry such as the example programmable circuitry 812 of FIG. 8. For instance, the timer circuitry 214 may be instantiated by the example microprocessor 900 of FIG. 9 executing machine executable instructions such as those implemented by at least blocks 408 and 410 of FIG. 4. In some examples, the timer circuitry 214 may be instantiated by hardware logic circuitry, which may be implemented by an ASIC, XPU, or the FPGA circuitry 1000 of FIG. 10 configured and/or structured to perform operations corresponding to the machine readable instructions. Additionally or alternatively, the timer circuitry 214 may be instantiated by any other combination of hardware, software, and/or firmware. For example, the timer circuitry 214 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The example telemetry data store 216 is a database that includes system telemetry and the overclocking frequencies. The example network interface 204 may use the overclocking frequency stored in the telemetry data store 216 to transmit the overclocking frequency to the example model generator circuitry 102 (FIG. 1). The example telemetry data store 216 stores the example telemetry data (e.g., system characterization data) such as the voltage value, the temperature value, and the power value. The telemetry data may be based on the number of cores that the CPU used in executing the workload. For example, the voltage of one core of the CPU might be a different value than the voltage of all the cores of the CPU.

The example model data store 218 is a database that includes the multiple AI models. The example model data store 218 may store a generated model (e.g., global model, deployed model, live model etc.) from the model generator circuitry 102 (FIG. 1). These example AI models may be updated by the example model updater circuitry 206. In some examples, the model updater circuitry 206 updates the stored AI model based on the metrics of the individual compute platform 104.

While an example manner of implementing the overclocking circuitry of FIG. 1 is illustrated in FIG. 2A, one or more of the elements, processes, and/or devices illustrated in FIG. 2A may be combined, divided, re-arranged, omitted, eliminated, and/or implemented in any other way. Further, the example network interface 204, the example model updater circuitry 206, the example overclocking execution circuitry 208, the example comparator circuitry 210, the example frequency generation circuitry 212, and the example timer circuitry 214 and/or, more generally, the example overclocking circuitry 110 of FIG. 2A, may be implemented by hardware alone or by hardware in combination with software and/or firmware. Thus, for example, any of the example network interface 204, the example model updater circuitry 206, the example overclocking execution circuitry 208, the example comparator circuitry 210, the example frequency generation circuitry 212, and the example timer circuitry 214, and/or, more generally, the example overclocking circuitry 110, could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example overclocking circuitry 110 of FIG. 2A may include one or more elements, processes, and/or devices in addition to, or instead of, those illustrated in FIG. 2A, and/or may include more than one of any or all of the illustrated elements, processes and devices.

FIG. 2B is a block diagram the example model generator circuitry 102 of FIG. 1 to perform generation of artificial intelligence overclocking models. The example model generator circuitry 102 of FIG. 2B may be instantiated (e.g., creating an instance of, bring into being for any length of time, materialize, implement, etc.) by programmable circuitry such as a Central Processor Unit (CPU) executing first instructions. Additionally or alternatively, the example model generator circuitry 102 of FIG. 2B may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 2B may, thus, be instantiated at the same or different times. Some or all of the circuitry of FIG. 2B may be instantiated, for example, in one or more threads executing concurrently on hardware and/or in series on hardware. Moreover, in some examples, some or all of the circuitry of FIG. 2B may be implemented by microprocessor circuitry executing instructions and/or FPGA circuitry performing operations to implement one or more virtual machines and/or containers.

The example model generator circuitry 102 includes example security circuitry 252, an example network interface 254, an example model trainer circuitry 256, an example model tuner circuitry 258, an example cloud computation circuitry 260, and an example platform operator circuitry 262, an example generated model data store 264 and an example received telemetry data store 266.

The example security circuitry 252 of the model generator circuitry 102 is to perform a security check on data received from compute platforms 104. In some examples, some of the compute platforms 104 (FIG. 1) may generate malicious telemetry data that is intended to negatively (e.g., adversely) train the generated AI model (e.g., global AI model, live AI model, cloud-based AI model). However, the example security circuitry 252 is to filter out telemetry data from the compute platforms 104 (FIG. 1). For example, the security circuitry 252 may, after retrieving the system characterization data and ground truth data of the maximum overclocking frequency for the compute platforms 104, the determines the validity of the data. The example security circuitry 252 allows the data that has passed the security check to be used as input data to train the generated AI model and to fine-tune the generated AI model.

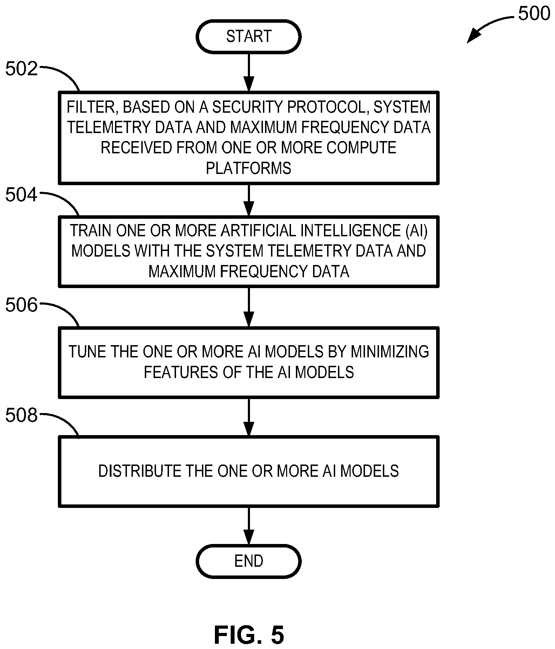

In some examples, the security circuitry 252 is instantiated by programmable circuitry executing security instructions and/or configured to perform operations such as those represented by the flowchart of FIG. 5.

In some examples, the model generator circuitry 102 includes means for performing a security check. For example, the means for performing a security check may be implemented by security circuitry 252. In some examples, the security circuitry 252 may be instantiated by programmable circuitry such as the example programmable circuitry 812 of FIG. 8. For instance, the security circuitry 252 may be instantiated by the example microprocessor 900 of FIG. 9 executing machine executable instructions such as those implemented by at least block 502 of FIG. 5. In some examples, the security circuitry 252 may be instantiated by hardware logic circuitry, which may be implemented by an ASIC, XPU, or the FPGA circuitry 1000 of FIG. 10 configured and/or structured to perform operations corresponding to the machine readable instructions. Additionally or alternatively, the security circuitry 252 may be instantiated by any other combination of hardware, software, and/or firmware. For example, the security circuitry 252 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The example network interface 254 of the model generator circuitry 102 receives the system telemetry data from the multiple compute platforms 104 (FIG. 1) and stores the received telemetry data in the example received telemetry data store 266. In some examples, the network interface 254 transmits the generated AI model to a cloud repository that is accessible by example manufacturers 108 (FIG. 1) and the example compute platforms 104 (FIG. 1). In some examples, the network interface 254 transmits the generated AI model directly to the example manufacturers 108 (FIG. 1) and the example compute platforms 104 (FIG. 1). In some examples, the network interface 254 transmits a determined overclocking frequency to ones of the compute platforms 104. The example network interface 254 may communicate with the compute platforms 104 (FIG. 1) and the manufacturers 108 (FIG. 1) by using a Wi-FI connection, Bluetooth connection, an Ethernet connection, a digital subscriber line (DSL) connection, a telephone line connection, a coaxial cable system, a satellite system, a line-of-site wireless system, a cellular telephone system, an optical connection, etc. to transmit the generated AI models or the overclocking frequencies.

In some examples, the network interface 254 is instantiated by programmable circuitry executing network interface instructions and/or configured to perform operations such as those represented by the flowchart of FIG. 5.

In some examples, the model generator circuitry 102 includes means for transmitting system telemetry data and overclocking frequency values. For example, the means for transmitting may be implemented by a network interface 254. In some examples, the network interface 254 may be instantiated by programmable circuitry such as the example programmable circuitry 812 of FIG. 8. For instance, the network interface 254 may be instantiated by the example microprocessor 900 of FIG. 9 executing machine executable instructions such as those implemented by at least block 508 of FIG. 5. In some examples, the network interface 254 may be instantiated by hardware logic circuitry, which may be implemented by an ASIC, XPU, or the FPGA circuitry 1000 of FIG. 10 configured and/or structured to perform operations corresponding to the machine readable instructions. Additionally or alternatively, the network interface 254 may be instantiated by any other combination of hardware, software, and/or firmware. For example, the network interface 254 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The example model trainer circuitry 256 is to generate and train the plurality of AI models. In some examples, the model trainer circuitry 256 is to evaluate a performance (e.g., prediction accuracy, prediction speed, etc.) of the plurality of AI models. The example model trainer circuitry 256 6 is to train the AI models with low-stress data, high-stress data, various core frequencies, and system telemetry data. Once the example plurality of AI models are fully trained by the example model trainer circuitry 256, the example model tuner circuitry 258 may perform fine-tuning on the fully trained AI models.

In some examples, the model trainer circuitry 256 is instantiated by programmable circuitry executing model trainer instructions and/or configured to perform operations such as those represented by the flowchart of FIGS. 5.

In some examples, the model generator circuitry 102 includes means for training artificial intelligence (AI) models. For example, the means for training AI models may be implemented by model trainer circuitry 256. In some examples, the model trainer circuitry 256 may be instantiated by programmable circuitry such as the example programmable circuitry 812 of FIG. 8. For instance, the model trainer circuitry 256 may be instantiated by the example microprocessor 900 of FIG. 9 executing machine executable instructions such as those implemented by at least block 504 of FIG. 5. In some examples, the model trainer circuitry 256 may be instantiated by hardware logic circuitry, which may be implemented by an ASIC, XPU, or the FPGA circuitry 1000 of FIG. 10 configured and/or structured to perform operations corresponding to the machine readable instructions. Additionally or alternatively, the model trainer circuitry 256 may be instantiated by any other combination of hardware, software, and/or firmware. For example, the model trainer circuitry 256 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The example model tuner circuitry 258 is to perform fine-tuning of the AI models by determining the impact of the features of the AI models in the final overall performance of the AI model (e.g., overall accuracy of the AI model, overall speed of the AI model). The example model tuner circuitry 258 is to minimize the number of features that contribute the overall performance of the AI model. The example model tuner circuitry 258 is to distinguish between the performance of the AI models to determine which AI model has the best performance with the least number of features. For example, a first AI model may be 85.0% accurate, while a second AI model may be 83.2% accurate. The example model tuner circuitry 258 may determine that the second AI model only has five key features (while the first AI model has eight key features) which result in the overall performance, and select this second AI model as the generated AI model to be deployed. Some of the example features of the AI model include the number of CPU samples, the number of workloads, and the number of different frequencies for different types of workloads are all features that are minimized by the example model tuner circuitry 258.

In some examples, the model tuner circuitry 258 is instantiated by programmable circuitry executing model tuner instructions and/or configured to perform operations such as those represented by the flowchart of FIG. 5.

In some examples, the model generator circuitry 102 includes means for tuning artificial intelligence (AI) models. For example, the means for tuning AI models may be implemented by model tuner circuitry 258. In some examples, the model tuner circuitry 258 may be instantiated by programmable circuitry such as the example programmable circuitry 812 of FIG. 8. For instance, the model tuner circuitry 258 may be instantiated by the example microprocessor 900 of FIG. 9 executing machine executable instructions such as those implemented by at least block 506 of FIG. 5. In some examples, the model tuner circuitry 258 may be instantiated by hardware logic circuitry, which may be implemented by an ASIC, XPU, or the FPGA circuitry 1000 of FIG. 10 configured and/or structured to perform operations corresponding to the machine readable instructions. Additionally or alternatively, the model tuner circuitry 258 may be instantiated by any other combination of hardware, software, and/or firmware. For example, the model tuner circuitry 258 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The example cloud computation circuitry 260 is to use the generated AI model to perform artificial intelligence inference. In examples disclosed herein, the performance of inference includes the generation of an output based on a model and input data. For example, one of the example compute platforms 104 may transmit telemetry data and request that an overclocking frequency value be returned. The example cloud computation circuitry 260 uses the telemetry data to determine an overclocking frequency value for the one of the example compute platforms 104.

In some examples, the cloud computation circuitry 260 is instantiated by programmable circuitry executing cloud computation instructions and/or configured to perform operations such as those represented by the flowchart of FIGS. 4 and 6.

In some examples, the model generator circuitry 102 includes means for performing cloud computation with cloud-based AI models. For example, the means for performing cloud computation may be implemented by cloud computation circuitry 260. In some examples, the cloud computation circuitry 260 may be instantiated by programmable circuitry such as the example programmable circuitry 812 of FIG. 8. For instance, the cloud computation circuitry 260 may be instantiated by the example microprocessor 900 of FIG. 9 executing machine executable instructions such as those implemented by at least block 414 of FIG. 4 and block 606 of FIG. 6. In some examples, the cloud computation circuitry 260 may be instantiated by hardware logic circuitry, which may be implemented by an ASIC, XPU, or the FPGA circuitry 1000 of FIG. 10 configured and/or structured to perform operations corresponding to the machine readable instructions. Additionally or alternatively, the cloud computation circuitry 260 may be instantiated by any other combination of hardware, software, and/or firmware. For example, the cloud computation circuitry 260 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The example platform operator circuitry 262 is to cause remote devices to perform overclocking. In some examples, the platform operator circuitry 262 causes a compute platform 104 that is an end-user device to perform overclocking by sending an instruction to the compute platform 104. In some examples, the instruction to perform overclocking may be sent to test devices for the purpose of collecting telemetry data. In such examples, the collection of telemetry data need not necessarily be performed by end-user devices (e.g., devices owned and/or operated by customers). Instead, the compute platforms that are instructed to collect telemetry and/or overclocking data (e.g., maximum frequency data) may be operated by a same entity that operates the model generator circuitry 102. In some examples, compute platforms that are instructed to collect telemetry and/or overclocking data (e.g., maximum frequency data) may be operated by an example one of the example manufacturers 108. In other words, the compute platforms that are instructed to collect telemetry data and/or overclocking data may be operated in a non-user environment and/or may be operated for the sole purpose of collecting such telemetry data, overclocking data, and/or other operational information for an entity (e.g., the entity operating the model generator circuitry 102, a manufacturer, etc.). The example platform operator circuitry 262 may cause the example overclocking execution circuitry 208 (FIG. 2A) of the compute platform 104 to adjust the frequency, voltage, or temperature of the compute platform 104 and collect frequency information (e.g., a maximum overclocking frequency).

In some examples, the platform operator circuitry 262 is instantiated by programmable circuitry executing platform operator instructions and/or configured to perform operations such as those represented by the flowchart of FIG. 6.

In some examples, the model generator circuitry 102 includes means for causing overclocking to occur at a remote computing platform. For example, the means for causing overclocking to occur at a remote computing platform may be implemented by platform operator circuitry 262. In some examples, the platform operator circuitry 262 may be instantiated by programmable circuitry such as the example programmable circuitry 812 of FIG. 8. For instance, the platform operator circuitry 262 may be instantiated by the example microprocessor 900 of FIG. 9 executing machine executable instructions such as those implemented by at least block 608 of FIG. 6. In some examples, the platform operator circuitry 262 may be instantiated by hardware logic circuitry, which may be implemented by an ASIC, XPU, or the FPGA circuitry 1000 of FIG. 10 configured and/or structured to perform operations corresponding to the machine readable instructions. Additionally or alternatively, the platform operator circuitry 262 may be instantiated by any other combination of hardware, software, and/or firmware. For example, the platform operator circuitry 262 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The example generated model data store 264 includes the multiple AI models that are generated and/or trained by the example model trainer circuitry 256 and, in some examples, tuned by the example model tuner circuitry 258. The example generated model data store 264 may store a generated artificial intelligence model (e.g., deployed model, global model, live model, accessible model).

The example received telemetry data store 266 is a database that includes the system telemetry sourced from the compute platforms 104. The system telemetry data may be sourced from end-user devices or test devices. The received telemetry data stored in the received telemetry data store 266 may include workload data, voltage data, frequency data, temperature data, and/or power data.

While an example manner of implementing the model generator circuitry 102 of FIG. 1 is illustrated in FIG. 2B, one or more of the elements, processes, and/or devices illustrated in FIG. 2B may be combined, divided, re-arranged, omitted, eliminated, and/or implemented in any other way. Further, the example security circuitry 252, the example network interface 254, the example model trainer circuitry 256, the example model tuner circuitry 258, the example cloud computation circuitry 260 the example platform operator circuitry 262, and/or, more generally, the example model generator circuitry 102 of FIG. 2B, may be implemented by hardware alone or by hardware in combination with software and/or firmware. Thus, for example, any of the example security circuitry 252, the example network interface 254, the example model trainer circuitry 256, the example model tuner circuitry 258, the example cloud computation circuitry 260 the example platform operator circuitry 262, and/or, more generally, the example model generator circuitry 102, could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example model generator circuitry 102 of FIG. 2B may include one or more elements, processes, and/or devices in addition to, or instead of, those illustrated in FIG. 2B, and/or may include more than one of any or all of the illustrated elements, processes and devices.

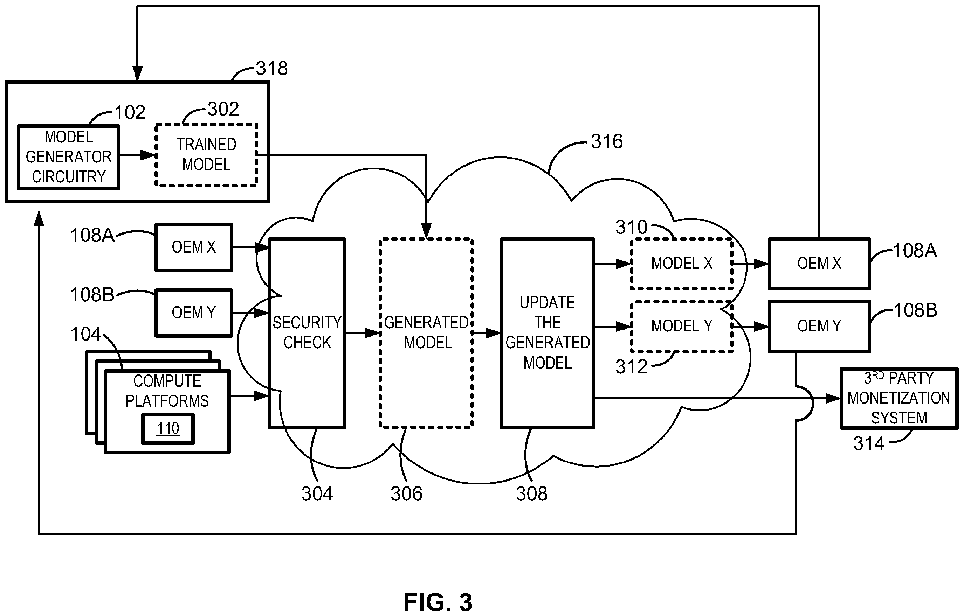

FIG. 3 is a block diagram of example AI models generated by the overclocking circuitry of FIG. 1 in a cloud-based environment. In the example of FIG. 3, the various versions of the AI overclocking model are illustrated with dashed lines. The example model generator circuitry 102 is to generate an example trained model 302. In the example of FIG. 3, the example trained model 302 is uploaded to an example cloud platform 316 that is separate from the model generator facility 318 of the model generator circuitry 102. System telemetry data from the first manufacturer 108A (e.g., OEM X) and the second manufacturer 108B (e.g., OEM Y), and the compute platforms 104 is received at the security check operation 304. The example security circuitry 252 (FIG. 2B) is to perform a security check on the telemetry data to filter out any malicious data that may affect the example generated model 306. At operation 308, the example model tuner circuitry 258 (FIG. 2B) updates the model. In some examples, the example model trainer circuitry 256 updates the model at operation 308. For example, the model tuner circuitry 258 (FIG. 2B) tunes the model to generate a first model 310 (e.g., "MODEL X") for use by the first manufacturer 108A (e.g., "OEM X") and a second model 312 ("MODEL Y") for use by the second manufacturer 108B (e.g., "OEM Y"). The example manufacturers 108 may use the specific models 310, 312 to design the compute platforms 104 and relay the results back to the example model generator circuitry 102. The example network interface 254 (FIG. 2B) may transmit the model to a third-party monetization system 314. The example third-party monetization system 314 may be that compute platforms 104 that participate with the updated model at operation 308 and provide system telemetry data to the model generator circuitry 102 to receive the model at a discount. For example, the system telemetry data may be sent to an advertisement service. For example, if the temperature of the compute platform 104 is high, the example advertisement service may recommend that a user of the compute platform 104 buys a cooler to lower the high temperature of the compute platform 104. For example, the model generator circuitry 102 may use the third-party monetization system 314 to pay a user for the system telemetry data. For example, the model generator circuitry 102 may unlock a software feature of the overclocking service if the user of the compute platforms shares the telemetry data with the example model generator circuitry 102.

Flowchart(s) representative of example machine readable instructions, which may be executed by programmable circuitry to implement and/or instantiate the overclocking circuitry 110 of FIG. 2A and/or representative of example operations which may be performed by programmable circuitry to implement and/or instantiate the overclocking circuitry 110 of FIG. 2A, are shown in FIGS. 4 and 6. A flowchart representative of example machine readable instructions, which may be executed by programmable circuitry to implement and/or instantiate the model generator circuitry 102 of FIG. 2B and/or representative of example operations which may be performed by programmable circuitry to implement and/or instantiate the model generator circuitry 102 of FIG. 2B, is shown in FIG. 5. The machine readable instructions may be one or more executable programs or portion(s) of one or more executable programs for execution by programmable circuitry such as the programmable circuitry 812 shown in the example processor platform 800 discussed below in connection with FIG. 8 and/or may be one or more function(s) or portion(s) of functions to be performed by the example programmable circuitry (e.g., an FPGA) discussed below in connection with FIGS. 9 and/or 10. In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart(s) illustrated in FIGS. 4-6, many other methods of implementing the example overclocking circuitry 110 and/or the example model generator circuitry 102 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 4-6 may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

FIG. 4 is a flowchart representative of example machine readable instructions and/or example operations 400 that may be executed, instantiated, and/or performed by programmable circuitry to generate system telemetry data. The example machine-readable instructions and/or the example operations 400 of FIG. 4 begin at block 402, at which the example.
The example machine-readable instructions and/or the example operations 400 of FIG. 4 begin at block 402, the example overclocking execution circuitry 208 decides whether to determine the overclocking frequency. For example, if the example overclocking execution circuitry 208 decides to determine the overclocking frequency (e.g., "YES"), control advances to block 404. Alternatively, in response to the overclocking execution circuitry 208 deciding not to determine the overclocking frequency (e.g., "NO"), control returns to block 402. The example overclocking execution circuitry 208 may determine to determine the overclocking frequency based on an instruction from the example platform operator circuitry 262 (FIG. 2B) of the example model generator circuitry 102 (FIG. 1). In some examples, the example overclocking execution circuitry 208 may determine to perform the overclocking frequency determination in response to an instruction from a user.

At block 404, the example overclocking execution circuitry 208 gets a baseline score (S_{baseline}) by running a benchmark for a third number of seconds (T₃). The example overclocking execution circuitry 208 may get the baseline score by executing workloads at a specific core frequency for the third number of seconds.

At block 406, the example overclocking execution circuitry 208 records the all-core frequency as an old frequency value (F_{MAX_OLD}) and sets a new core frequency value (F_{MAX_SC}) for system characterization.

At block 408, the example overclocking execution circuitry 208 collects system telemetry by executing the low-stress workload for a first number of seconds (T₁). The example overclocking execution circuitry 208 may record the voltage, temperature, and/or power of the individual compute platform while the low-stress workload was being processed at the new core frequency value (F_{MAX_SC}). The example timer circuitry 214 is to determine the amount of time that has elapsed during the execution of the low-stress workload. For example, the overclocking execution circuitry 208 may determine a first number of low-stress workloads (e.g., five low-stress workloads) and a second number of different core frequencies (e.g., a first frequency of 5.0 GHz, a second frequency of 5.5 GHz, a third frequency of 5.7 GHz, and a fourth frequency of 6.0 GHz). In some examples, the first number (e.g., five) of low-stress workloads corresponds to the second number of frequencies (e.g., five). In such examples, for each low-stress workload and core frequency combination, the example overclocking execution circuitry 208 runs the low-stress workload for a third number of seconds (e.g., five seconds, ten seconds, sixty seconds, three hundred seconds etc.).

At block 410, the example overclocking execution circuitry 208 collects system telemetry by executing the high-stress workload for a second number of seconds (T₂). The example overclocking execution circuitry 208 may record the voltage, temperature and power of the individual compute platform while the high-stress workload was being processed at the new core frequency value (F_{MAX_SC}). The example timer circuitry 214 is to determine the amount of time that has elapsed during the execution of the high-stress workload. The example overclocking execution circuitry 208 may determine five high-stress workloads (which may be a different number than the number of low-stress workloads). In other examples, the overclocking execution circuitry 208 determines the same number of high-stress workloads based on the number of low-stress workloads. The example overclocking execution circuitry 208 runs the high-stress workloads for a sixth number of seconds. The example overclocking execution circuitry 208 uses the example timer circuitry 214 to determine the amount of time (e.g., the third number of seconds).

At block 412, the example model updater circuitry 206 collects the telemetry data from the previous two operations. The example telemetry data may be used to train an AI model to predict the new all core frequency (F_{MAX_NEW}). In some examples, the telemetry data is used as an input to an AI model to predict and/or generate an all-core frequency.

At block 414, the example overclocking execution circuitry 208 generates the new all-core frequency (F_{MAX_NEW}). The overclocking execution circuitry 208 generates the predicted all core frequency with the fully trained model. In some examples, the overclocking execution circuitry 208 uses the example cloud computation circuitry 260 (FIG. 2B) of the model generator circuitry 102 (FIG. 1) to predict the new all-core frequency.

At block 416, the example overclocking execution circuitry 208 runs the benchmark again for the third number of seconds (T₃) with the predicted all core frequency (F_{MAX_NEW}) with an overclocking thermal velocity boost (OCTVB) enabled. The example overclocking execution circuitry 208 gets a new score (S_{NEW}).

At block 418, the example comparator circuitry 210 compares the baseline score with the new score. For example, if the comparator circuitry 210 determines that the baseline score is greater than the new score (e.g., "YES"), control advances to block 424. Alternatively, if the comparator circuitry 210 determines that the baseline score is not greater than the new score (e.g., "NO"), control advances to block 420. In some examples, the comparator circuitry 210 determines if the baseline score is greater than or equal to the new score.

At block 420, the example overclocking execution circuitry 208 removes a number of hertz from the new predicted frequency. For example, if the overclocking frequency is 5.8 GHz (five point eight gigahertz), the example overclocking execution circuitry 208 may remove zero point three gigahertz (0.3 GHz) from the overclocking frequency to generate an overclocking frequency of five point five gigahertz (5.5 GHz). Control advances to block 422.

At block 422, the example comparator circuitry 210 compares the new overclocking frequency (F_{MAX_NEW}) with the recorded old overclocking frequency (F_{MAX_OLD}). For example, if the new overclocking frequency is less than the recorded old overclocking frequency (e.g., "YES"), control advances to block 424. Alternatively, if the example new overclocking frequency is not less than the recorded old overclocking frequency (e.g., "NO"), control returns to block 416.

At block 424, the example overclocking execution circuitry 208 restores the old overclocking frequency value as the new overclocking frequency value. For example, if the performance of the old overclocking frequency value is better than the performance of the new overclocking frequency value, the old overclocking frequency value gets stored.

At block 426, the example overclocking execution circuitry 208 sets the new overclocking frequency value for the individual compute platform. For example, the overclocking execution circuitry 208 may use an extreme tuning utility (XTU) to report the new overclocking frequency to the user. In such examples, the overclocking execution circuitry 208 may wait for an indication from the user to set the frequency value of the compute platform. In some examples, the overclocking execution circuitry 208 automatically sets the overclocking frequency value without user input.

At block 428, the example network interface 204 transmits the example telemetry data and overclocking frequency value to the example model generator circuitry 102. For example, a model generator circuitry 102 (FIG. 1) may be a cloud-based entity that uses the new overclocking frequency and telemetry data transmitted by the network interface 204 for generation of a model to facilitate further overclocking efforts, which may then be performed without having to implement the process of FIG. 4.

FIG. 5 is a flowchart representative of example machine readable instructions and/or example operations 500 that may be executed, instantiated, and/or performed by programmable circuitry to generate a plurality of AI models by the model generator circuitry 102 (FIG. 2B). The example machine-readable instructions and/or the example operations 500 of FIG. 5 begin at block 502, at which the example security circuitry 252 filters, based on a security protocol, system telemetry data and maximum frequency data received from a plurality of compute platforms 104 (FIG. 1). For example, the security circuitry 252 may remove data that is deemed to be malicious. The removed data will not be used in altering, adjusting, tuning, or training the overclocking model. The example platform operator circuitry 262 may generate the system telemetry data by instructing compute platforms 104 to execute workloads, record the temperature, voltage, and/or power while the workloads were being executed, and transmit the data to the example security circuitry 252.

At block 504, the example model trainer circuitry 256 trains the plurality of AI models with the received system telemetry data and maximum frequency data sourced by the platform operator circuitry 262.

At block 506, the example model tuner circuitry 258 tunes the first AI model from the one or more AI models. For example, the model tuner circuitry 258 may tune the first AI model from the plurality of the AI models by determining the features of the first AI model that provide the most impact in the prediction scores of the AI models and then minimizing these features. In some examples, the tuning of block 506 may be omitted.

At block 508, the example network interface 254 distributes the one or more AI models to the example compute platform 104. In some examples, only one model is provided to each respective compute platform based on, for example, operational parameters of the compute platform, a make of the compute platform, a model of the compute platform, etc. In some examples, where the model generator circuitry 102 is implemented on a first compute platform 104, the example network interface 254 may distribute the one or more AI models to the first compute platform 104 (itself). In some examples, the network interface 254 may distribute the one or more AI models to the manufacturers for deployment of their compute platforms. The instructions 500 then terminate, but may be re-executed to generate and/or distribute further AI models.

FIG. 6 is a flowchart representative of example machine readable instructions and/or example operations 600 that may be executed, instantiated, and/or performed by programmable circuitry to perform overclocking of a compute platform 104. The example machine-readable instructions and/or the example operations 600 of FIG. 6 begin at block 602, at which the example network interface 204 accesses one or more artificial intelligence (AI) models. For example, the network interface 204 may access the one or more AI models from the model generator circuitry 102 (FIG. 1) and then download the one or more AI models to the example model data store 218 (FIG. 2A).

At block 604, the example model updater circuitry 206 trains and/or tunes, on the local compute platform 104, a first AI model of the one or more AI models. For example, the model updater circuitry 206 may use local telemetry data from the example telemetry data store 216 to update the first AI model. The example updated first AI model will result in an increased performance in the prediction of the overclocking frequency, which will result in an increased performance of the computing platform 104. In the illustrated example of FIG. 6, block 604 is optional and may, in some examples, be omitted (e.g., in scenarios where additional local tuning is not to be performed).

At block 605, the example frequency generation circuitry 212 collects workload information of the compute platform 104. Such workload information may indicate, for example, whether a processor of the compute platform 104 is executing a high intensity workload, a low intensity workload, etc. In some examples, the workload information represents a current workload of the compute platform 104. In some other examples, the workload information represents an expected (e.g., predicted, future) workload of the compute platform 104.

At block 606, the example frequency generation circuitry 212 generates an overclocking frequency value using the first tuned AI model and the workload information. For example, the frequency generation circuitry 212 may perform inference with the first tuned AI model using the collected workload information to generate an overclocking frequency value. In some examples, multiple overclocking frequency values are determined based on the number and/or type of workloads. For example, if there are three workloads (e.g., a low-stress workload, a first high-stress workload, and a second high-stress workload), the example frequency generation circuitry 212 may determine that while the processor is executing the low-stress workload, the overclocking frequency is 5.0 GHz (five point five GHz). In such examples, the example frequency generation circuitry 212 may determine that if the low-stress workload and the first high-stress workload are to be executed at the same time, then the overclocking frequency is 4.9 GHz (four point nine gigahertz). In such examples, the example frequency generation circuitry 212 may determine that if the first high-stress workload is executed by the processor, then the overclocking frequency is 6.0 GHz (six point zero gigahertz). In some examples, the example network interface 204 sends a request to the example cloud computation circuitry 260 of the example model generator circuitry 102 to perform the inference. Such a request may include workload information identifying workloads presently executed (and/or expected to be executed) by the compute platform 104. In such examples, the cloud computation circuitry 260, after performing the inference with either the first tuned AI model specific to the local compute platform 104 or a generic AI model, transmits the overclocking frequency value back to the example network interface 204.

At block 608, the example overclocking execution circuitry 208 performs the overclocking based on the generated overclocking frequency value. For example, the individual compute platform now has a clock frequency equal to the overclocking frequency value. In some examples, the platform operator circuitry 262 of the example model generator circuitry 102 performs the overclocking on a remote end-user device (e.g., a remote one of the compute platforms 104).

At block 610, the example network interface 204 transmits the system telemetry data and the overclocking frequency value to a cloud-based AI model generator (e.g., the model generator circuitry 102 of FIGS. 1, 2A and 3). The example model generator circuitry 102 may use the overclocking frequency value to update or generate the cloud-based AI model (e.g., global model, deployed model, generated model).

At block 615, the example frequency generation circuitry 212 determines whether an overclocking frequency should be adjusted. Such a determination may be made periodically (e.g., every minute, every thirty seconds, etc.) and/or a-periodically (e.g., upon booting of the compute platform 104, upon execution of a process by the compute platform 104, upon a request from a user, upon a detection of a change in a workload executed by the compute platform 104, etc.). If the example frequency generation circuitry 212 determines that the overclocking frequency should be adjusted (e.g., block 615 returns a result of YES), control proceeds to block 605, where the frequency generation circuitry 212 collects workload information.

If the example frequency generation circuitry 212 determines that the overclocking frequency is not to be adjusted (e.g., block 615 returns a result of NO) the example frequency generation circuitry 212 waits (Block 620), and then again determines whether to adjust the overclocking frequency is re-performed. (Block 615). In some examples, the process of FIG. 6 may re-started (e.g., may revert to block 602, where the AI models are re-retrieved. Such re-retrieval may be performed periodically and/or a-periodically. For example, the re-retrieval of the model may be the result of detection of a fault in overclocking (e.g., a system failure resulting from an identified overclocking frequency that was too high and caused a system crash and/or other issue).

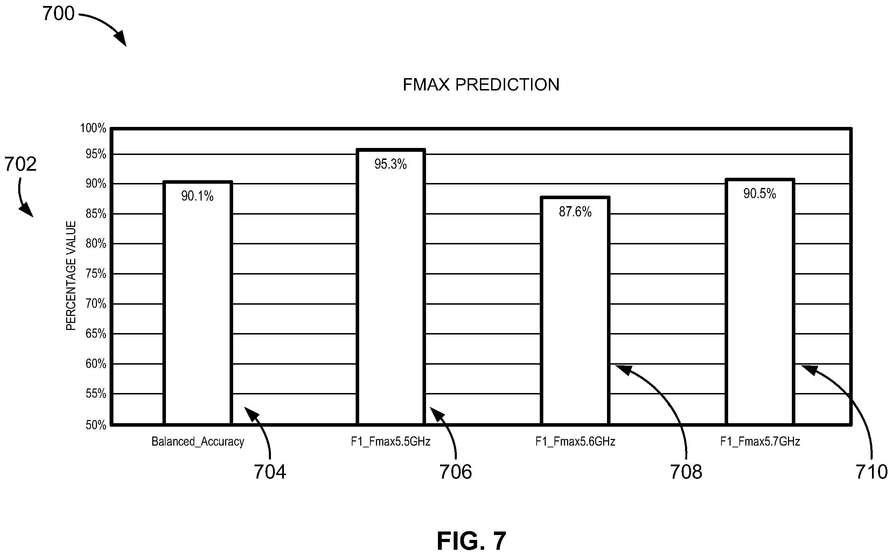

FIG. 7 is an example set of overclocking results. In some examples, the example overclocking circuitry 110 uses the example model updater circuitry 206, the example comparator circuitry 210, and the example frequency generation circuitry 212 to generate the results of FIG. 7. In some examples, the model generator circuitry 102 uses the example model trainer circuitry 256, the example model tuner circuitry 258, and the example cloud computation circuitry 260 to generate the results of FIG. 7. The results of FIG. 7 are shown in a graph 700. The results of FIG. 7 compare a possible overclocking frequency of 5.5 GHz, 5.6GHz, and 5.7GHz along a percentage value axis 702 (e.g., vertical axis). The percentage value of the percentage value axis 702 represents an accuracy of predicting a maximum frequency to be used in overclocking. The example horizontal axis shows different performance metrics 704, 706, 708, 710 based on the three overclocking frequencies. The example first performance metric 704 shows the balanced accuracy of the three overclocking frequencies 5.5GHz, 5.6GHZ, and 5.7GHz. The example second performance metric 706 illustrates the F-1 score of the first overclocking frequency value (e.g., 5.5GHz). The example third performance metric 708 illustrates the F-1 score of the second overclocking frequency value (e.g., 5.6GHz). The example fourth performance metric 710 illustrates the F-1 score of the third overclocking frequency value (e.g., 5.7GHz). The F-1 score is the harmonic mean of a precision score and a recall score.

As shown in the example of FIG. 7, the first performance metric 704 scored 90.1%, the second performance metric 706 scored 95.3%, the third performance metric 708 scored 87.6%, and the fourth performance metric 710 scored 90.5%. In some examples, the prediction of the maximum frequency value is based on performing overclocking by setting the clock frequency to either 5.5 GHz, 5.6 GHz, or 5.7 GHz on numerous compute platforms (e.g., thirty compute platforms, seventy-eight compute platforms). In other examples, different overclocking frequencies may be used (e.g., 0.5 GHz, 3 GHz, 4GHz, 10GHz, 100 GHz). However, the higher the overclocking frequency, the higher the likelihood of processor overheating and/or malfunction of the compute platform.

In some examples, the different overclocking frequencies are selected for different workloads that are classified in different stresses. In other examples, a single overclocking frequency is selected regardless of the classification of the different workloads.

FIG. 8 is a block diagram of an example programmable circuitry platform 800 structured to execute and/or instantiate both the example machine-readable instructions and/or the example operations of FIGS. 4 and 6 to implement the overclocking circuitry 110 of FIG. 2A and the example machine-readable instructions and/or the example operations of FIG. 5 to implement the model generator circuitry 102 of FIG. 2B. The programmable circuitry platform 800 can be, for example, a server, a personal computer, a workstation, a self-learning machine (e.g., a neural network), or any other type of computing and/or electronic device.

The programmable circuitry platform 800 of the illustrated example includes programmable circuitry 812. The programmable circuitry 812 of the illustrated example is hardware. For example, the programmable circuitry 812 can be implemented by one or more integrated circuits, logic circuits, FPGAs, microprocessors, CPUs, GPUs, DSPs, and/or microcontrollers from any desired family or manufacturer. The programmable circuitry 812 may be implemented by one or more semiconductor based (e.g., silicon based) devices. In this example, the programmable circuitry 812 implements the example network interface 204, the example model updater circuitry 206, the example overclocking execution circuitry 208, the example comparator circuitry 210, the example frequency generation circuitry 212, the example timer circuitry 214, the example security circuitry 252, the example network interface 254, the example model trainer circuitry 256, the example model tuner circuitry 258, the example cloud computation circuitry 260, and the example platform operator circuitry 262.

The programmable circuitry 812 of the illustrated example includes a local memory 813 (e.g., a cache, registers, etc.). The programmable circuitry 812 of the illustrated example is in communication with main memory 814, 816, which includes a volatile memory 814 and a non-volatile memory 816, by a bus 818. The volatile memory 814 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 816 may be implemented by flash memory and/or any other desired type of memory device. Access to the main memory 814, 816 of the illustrated example is controlled by a memory controller 817. In some examples, the memory controller 817 may be implemented by one or more integrated circuits, logic circuits, microcontrollers from any desired family or manufacturer, or any other type of circuitry to manage the flow of data going to and from the main memory 814, 816.

The programmable circuitry platform 800 of the illustrated example also includes interface circuitry 820. The interface circuitry 820 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 822 are connected to the interface circuitry 820. The input device(s) 822 permit(s) a user (e.g., a human user, a machine user, etc.) to enter data and/or commands into the programmable circuitry 812. The input device(s) 822 can be implemented by, for example, an audio sensor, a microphone, a camera (still or video), a keyboard, a button, a mouse, a touchscreen, a trackpad, a trackball, an isopoint device, and/or a voice recognition system.

One or more output devices 824 are also connected to the interface circuitry 820 of the illustrated example. The output device(s) 824 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 820 of the illustrated example, thus, typically includes a graphics driver card, a graphics driver chip, and/or graphics processor circuitry such as a GPU.

The interface circuitry 820 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 826. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 800 of the illustrated example also includes one or more mass storage discs or devices 828 to store firmware, software, and/or data. Examples of such mass storage discs or devices 828 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine readable instructions 832, which may be implemented by the machine readable instructions of FIGS. 4-6, may be stored in the mass storage device 828, in the volatile memory 814, in the non-volatile memory 816, and/or on at least one non-transitory computer readable storage medium such as a CD or DVD which may be removable.

FIG. 9 is a block diagram of an example implementation of the programmable circuitry 812 of FIG. 8. In this example, the programmable circuitry 812 of FIG. 8 is implemented by a microprocessor 900. For example, the microprocessor 900 may be a general-purpose microprocessor (e.g., general-purpose microprocessor circuitry). The microprocessor 900 executes some or all of the machine-readable instructions of the flowcharts of FIGS. 4-6 to effectively instantiate the circuitry of FIGS. 2A-2B as logic circuits to perform operations corresponding to those machine readable instructions. In some such examples, the circuitry of FIGS. 2A-2B is instantiated by the hardware circuits of the microprocessor 900 in combination with the machine-readable instructions. For example, the microprocessor 900 may be implemented by multi-core hardware circuitry such as a CPU, a DSP, a GPU, an XPU, etc. Although it may include any number of example cores 902 (e.g., 1 core), the microprocessor 900 of this example is a multi-core semiconductor device including N cores. The cores 902 of the microprocessor 900 may operate independently or may cooperate to execute machine readable instructions. For example, machine code corresponding to a firmware program, an embedded software program, or a software program may be executed by one of the cores 902 or may be executed by multiple ones of the cores 902 at the same or different times. In some examples, the machine code corresponding to the firmware program, the embedded software program, or the software program is split into threads and executed in parallel by two or more of the cores 902. The software program may correspond to a portion or all of the machine readable instructions and/or operations represented by the flowcharts of FIGS. 4-6.

The cores 902 may communicate by a first example bus 904. In some examples, the first bus 904 may be implemented by a communication bus to effectuate communication associated with one(s) of the cores 902. For example, the first bus 904 may be implemented by at least one of an Inter-Integrated Circuit (I2C) bus, a Serial Peripheral Interface (SPI) bus, a PCI bus, or a PCIe bus. Additionally or alternatively, the first bus 904 may be implemented by any other type of computing or electrical bus. The cores 902 may obtain data, instructions, and/or signals from one or more external devices by example interface circuitry 906. The cores 902 may output data, instructions, and/or signals to the one or more external devices by the interface circuitry 906. Although the cores 902 of this example include example local memory 920 (e.g., Level 1 (L1) cache that may be split into an L1 data cache and an L1 instruction cache), the microprocessor 900 also includes example shared memory 910 that may be shared by the cores (e.g., Level 2 (L2 cache)) for high-speed access to data and/or instructions. Data and/or instructions may be transferred (e.g., shared) by writing to and/or reading from the shared memory 910. The local memory 920 of each of the cores 902 and the shared memory 910 may be part of a hierarchy of storage devices including multiple levels of cache memory and the main memory (e.g., the main memory 814, 816 of FIG. 8). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 902 may be referred to as a CPU, DSP, GPU, etc., or any other type of hardware circuitry. Each core 902 includes control unit circuitry 914, arithmetic and logic (AL) circuitry (sometimes referred to as an ALU) 916, a plurality of registers 918, the local memory 920, and a second example bus 922. Other structures may be present. For example, each core 902 may include vector unit circuitry, single instruction multiple data (SIMD) unit circuitry, load/store unit (LSU) circuitry, branch/jump unit circuitry, floating-point unit (FPU) circuitry, etc. The control unit circuitry 914 includes semiconductor-based circuits structured to control (e.g., coordinate) data movement within the corresponding core 902. The AL circuitry 916 includes semiconductor-based circuits structured to perform one or more mathematic and/or logic operations on the data within the corresponding core 902. The AL circuitry 916 of some examples performs integer based operations. In other examples, the AL circuitry 916 also performs floating-point operations. In yet other examples, the AL circuitry 916 may include first AL circuitry that performs integer-based operations and second AL circuitry that performs floating-point operations. In some examples, the AL circuitry 916 may be referred to as an Arithmetic Logic Unit (ALU).

The registers 918 are semiconductor-based structures to store data and/or instructions such as results of one or more of the operations performed by the AL circuitry 916 of the corresponding core 902. For example, the registers 918 may include vector register(s), SIMD register(s), general-purpose register(s), flag register(s), segment register(s), machine-specific register(s), instruction pointer register(s), control register(s), debug register(s), memory management register(s), machine check register(s), etc. The registers 918 may be arranged in a bank as shown in FIG. 9. Alternatively, the registers 918 may be organized in any other arrangement, format, or structure, such as by being distributed throughout the core 902 to shorten access time. The second bus 922 may be implemented by at least one of an I2C bus, a SPI bus, a PCI bus, or a PCIe bus.

Each core 902 and/or, more generally, the microprocessor 900 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 900 is a semiconductor device fabricated to include many transistors interconnected to implement the structures described above in one or more integrated circuits (ICs) contained in one or more packages.

The microprocessor 900 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 900, in the same chip package as the microprocessor 900 and/or in one or more separate packages from the microprocessor 900.

FIG. 10 is a block diagram of another example implementation of the programmable circuitry 812 of FIG. 8. In this example, the programmable circuitry 812 is implemented by FPGA circuitry 1000. For example, the FPGA circuitry 1000 may be implemented by an FPGA. The FPGA circuitry 1000 can be used, for example, to perform operations that could otherwise be performed by the example microprocessor 900 of FIG. 9 executing corresponding machine readable instructions. However, once configured, the FPGA circuitry 1000 instantiates the operations and/or functions corresponding to the machine readable instructions in hardware and, thus, can often execute the operations/functions faster than they could be performed by a general-purpose microprocessor executing the corresponding software.

More specifically, in contrast to the microprocessor 900 of FIG. 9 described above (which is a general purpose device that may be programmed to execute some or all of the machine readable instructions represented by the flowchart(s) of FIGS. 4-6 but whose interconnections and logic circuitry are fixed once fabricated), the FPGA circuitry 1000 of the example of FIG. 10 includes interconnections and logic circuitry that may be configured, structured, programmed, and/or interconnected in different ways after fabrication to instantiate, for example, some or all of the operations/functions corresponding to the machine readable instructions represented by the flowchart(s) of FIGS. 4-6. In particular, the FPGA circuitry 1000 may be thought of as an array of logic gates, interconnections, and switches. The switches can be programmed to change how the logic gates are interconnected by the interconnections, effectively forming one or more dedicated logic circuits (unless and until the FPGA circuitry 1000 is reprogrammed). The configured logic circuits enable the logic gates to cooperate in different ways to perform different operations on data received by input circuitry. Those operations may correspond to some or all of the instructions (e.g., the software and/or firmware) represented by the flowchart(s) of FIGS. 4-6. As such, the FPGA circuitry 1000 may be configured and/or structured to effectively instantiate some or all of the operations/functions corresponding to the machine readable instructions of the flowchart(s) of FIGS. 4-6 as dedicated logic circuits to perform the operations/functions corresponding to those software instructions in a dedicated manner analogous to an ASIC. Therefore, the FPGA circuitry 1000 may perform the operations/functions corresponding to the some or all of the machine readable instructions of FIGS. 4-6 faster than the general-purpose microprocessor can execute the same.

In the example of FIG. 10, the FPGA circuitry 1000 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 1000 of FIG. 10 may access and/or load the binary file to cause the FPGA circuitry 1000 of FIG. 10 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1000 of FIG. 10 to cause configuration and/or structuring of the FPGA circuitry 1000 of FIG. 10, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 1000 of FIG. 10 may access and/or load the binary file to cause the FPGA circuitry 1000 of FIG. 10 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1000 of FIG. 10 to cause configuration and/or structuring of the FPGA circuitry 1000 of FIG. 10, or portion(s) thereof.

The FPGA circuitry 1000 of FIG. 10, includes example input/output (I/O) circuitry 1002 to obtain and/or output data to/from example configuration circuitry 1004 and/or external hardware 1006. For example, the configuration circuitry 1004 may be implemented by interface circuitry that may obtain a binary file, which may be implemented by a bit stream, data, and/or machine-readable instructions, to configure the FPGA circuitry 1000, or portion(s) thereof. In some such examples, the configuration circuitry 1004 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 1006 may be implemented by external hardware circuitry. For example, the external hardware 1006 may be implemented by the microprocessor 900 of FIG. 9.

The FPGA circuitry 1000 also includes an array of example logic gate circuitry 1008, a plurality of example configurable interconnections 1010, and example storage circuitry 1012. The logic gate circuitry 1008 and the configurable interconnections 1010 are configurable to instantiate one or more operations/functions that may correspond to at least some of the machine readable instructions of FIGS. 4-6 and/or other desired operations. The logic gate circuitry 1008 shown in FIG. 10 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1008 to enable configuration of the electrical structures and/or the logic gates to form circuits to perform desired operations/functions. The logic gate circuitry 1008 may include other electrical structures such as look-up tables (LUTs), registers (e.g., flip-flops or latches), multiplexers, etc.

The configurable interconnections 1010 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1008 to program desired logic circuits.

The storage circuitry 1012 of the illustrated example is structured to store result(s) of the one or more of the operations performed by corresponding logic gates. The storage circuitry 1012 may be implemented by registers or the like. In the illustrated example, the storage circuitry 1012 is distributed amongst the logic gate circuitry 1008 to facilitate access and increase execution speed.

The example FPGA circuitry 1000 of FIG. 10 also includes example dedicated operations circuitry 1014. In this example, the dedicated operations circuitry 1014 includes special purpose circuitry 1016 that may be invoked to implement commonly used functions to avoid the need to program those functions in the field. Examples of such special purpose circuitry 1016 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 1000 may also include example general purpose programmable circuitry 1018 such as an example CPU 1020 and/or an example DSP 1022. Other general purpose programmable circuitry 1018 may additionally or alternatively be present such as a GPU, an XPU, etc., that can be programmed to perform other operations.

Although FIGS. 9 and 10 illustrate two example implementations of the programmable circuitry 812 of FIG. 8, many other approaches are contemplated. For example, FPGA circuitry may include an on-board CPU, such as one or more of the example CPU 1020 of FIG. 10. Therefore, the programmable circuitry 812 of FIG. 8 may additionally be implemented by combining at least the example microprocessor 900 of FIG. 9 and the example FPGA circuitry 1000 of FIG. 10. In some such hybrid examples, one or more cores 902 of FIG. 9 may execute a first portion of the machine readable instructions represented by the flowchart(s) of FIGS. 4-6 to perform first operation(s)/function(s), the FPGA circuitry 1000 of FIG. 10 may be configured and/or structured to perform second operation(s)/function(s) corresponding to a second portion of the machine readable instructions represented by the flowcharts of FIG. 4-6, and/or an ASIC may be configured and/or structured to perform third operation(s)/function(s) corresponding to a third portion of the machine readable instructions represented by the flowcharts of FIGS. 4-6.

It should be understood that some or all of the circuitry of FIGS. 2A-2B may, thus, be instantiated at the same or different times. For example, same and/or different portion(s) of the microprocessor 900 of FIG. 9 may be programmed to execute portion(s) of machine-readable instructions at the same and/or different times. In some examples, same and/or different portion(s) of the FPGA circuitry 1000 of FIG. 10 may be configured and/or structured to perform operations/functions corresponding to portion(s) of machine-readable instructions at the same and/or different times.

In some examples, some or all of the circuitry of FIGS. 2A-2B may be instantiated, for example, in one or more threads executing concurrently and/or in series. For example, the microprocessor 900 of FIG. 9 may execute machine readable instructions in one or more threads executing concurrently and/or in series. In some examples, the FPGA circuitry 1000 of FIG. 10 may be configured and/or structured to carry out operations/functions concurrently and/or in series. Moreover, in some examples, some or all of the circuitry of FIGS. 2A-2B may be implemented within one or more virtual machines and/or containers executing on the microprocessor 900 of FIG. 9.

In some examples, the programmable circuitry 812 of FIG. 8 may be in one or more packages. For example, the microprocessor 900 of FIG. 9 and/or the FPGA circuitry 1000 of FIG. 10 may be in one or more packages. In some examples, an XPU may be implemented by the programmable circuitry 812 of FIG. 8, which may be in one or more packages. For example, the XPU may include a CPU (e.g., the microprocessor 900 of FIG. 9, the CPU 1020 of FIG. 10, etc.) in one package, a DSP (e.g., the DSP 1022 of FIG. 10) in another package, a GPU in yet another package, and an FPGA (e.g., the FPGA circuitry 1000 of FIG. 10) in still yet another package.

A block diagram illustrating an example software distribution platform 1105 to distribute software such as the example machine readable instructions 832 of FIG. 8 to other hardware devices (e.g., hardware devices owned and/or operated by third parties from the owner and/or operator of the software distribution platform) is illustrated in FIG. 11. The example software distribution platform 1105 may be implemented by any computer server, data facility, cloud service, etc., capable of storing and transmitting software to other computing devices. The third parties may be customers of the entity owning and/or operating the software distribution platform 1105. For example, the entity that owns and/or operates the software distribution platform 1105 may be a developer, a seller, and/or a licensor of software such as the example machine readable instructions 832 of FIG. 8. The third parties may be consumers, users, retailers, OEMs, etc., who purchase and/or license the software for use and/or re-sale and/or sub-licensing. In the illustrated example, the software distribution platform 1105 includes one or more servers and one or more storage devices. The storage devices store the machine readable instructions 832, which may correspond to the example machine readable instructions of FIGS. 4-6, as described above. The one or more servers of the example software distribution platform 1105 are in communication with an example network 1110, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 832 from the software distribution platform 1105. For example, the software, which may correspond to the example machine readable instructions of FIGS. 4-6, may be downloaded to the example programmable circuitry platform 800, which is to execute the machine readable instructions 832 to implement the overclocking circuitry 110. In some examples, one or more servers of the software distribution platform 1105 periodically offer, transmit, and/or force updates to the software (e.g., the example machine readable instructions 832 of FIG. 8) to ensure improvements, patches, updates, etc., are distributed and applied to the software at the end user devices. Although referred to as software above, the distributed "software" could alternatively be firmware.

From the foregoing, it will be appreciated that example systems, apparatus, articles of manufacture, and methods have been disclosed that perform cloud-based artificial intelligence overclocking. Disclosed systems, apparatus, articles of manufacture, and methods improve the efficiency of using a computing device by determining an overclocking frequency which allows the computing device to perform at a higher efficiency. Disclosed systems, apparatus, articles of manufacture, and methods improve the efficiency of using a computing device by training a plurality of AI models, where the AI models are used to predict the overclocking frequency. Rather an a user manually determining various overclocking frequency which wastes processing power and compute time, the AI model is to predict a maximum overclocking frequency based on system telemetry data. The overclocking frequency can be set based on the recommendation of the AI model which increases the performance of the computing device faster compared to a human determining the overclocking frequency. Disclosed systems, apparatus, articles of manufacture, and methods are accordingly directed to one or more improvement(s) in the operation of a machine such as a computer or other electronic and/or mechanical device.

Example methods, apparatus, systems, and articles of manufacture to perform cloud-based artificial intelligence overclocking are disclosed herein. Further examples and combinations thereof include the following:
Example 1 includes an apparatus to perform cloud-based artificial intelligence (AI) overclocking, the apparatus comprising interface circuitry, machine readable instructions, and programmable circuitry to at least one of instantiate or execute the machine readable instructions to collect workload information, the workload information representing a workload to be executed by a first compute platform, cause generation of an output from an AI model based on the workload information, the output representing an overclocking frequency value to be used for operation of the first compute platform, and perform overclocking based on the overclocking frequency value.
Example 2 includes the apparatus of example 1, wherein to cause generation of the output from the AI model, the programmable circuitry is to obtain a local copy of the AI model, and execute the AI model based on the workload information.
Example 3 includes the apparatus of example 1, wherein to cause the generation of the output from the AI model, the programmable circuitry is to transmit the workload information to a model generator and request that the model generator generate the output using the workload information.
Example 4 includes the apparatus of example 1, wherein the workload information includes system telemetry data that includes at least one of voltage data, temperature data, individual core power data, and multiple core power data.
Example 5 includes the apparatus of example 1, wherein the AI model is trained by model generator circuitry separate from the apparatus, and the programmable circuitry is to tune the AI model.
Example 6 includes the apparatus of example 5, wherein to tune the AI model, the programmable circuitry is to determine importance of respective features of the AI model, the features associated with a first overclocking performance, and minimize the features of the AI model based on the importance.
Example 7 includes the apparatus of example 1, wherein the programmable circuitry is to, after performing overclocking on the first compute platform, determine to collect subsequent workload information, the subsequent workload information to adjust the overclocking frequency value.
Example 8 includes a non-transitory machine-readable storage medium comprising instructions to cause programmable circuitry to at least collect workload information, the workload information representing a workload to be executed by a first compute platform, cause generation of an output from an AI model based on the workload information, the output representing overclocking frequency value to be used for operation of the first compute platform, and perform overclocking based on the overclocking frequency value.
Example 9 includes the non-transitory machine-readable storage medium of example 8, wherein the instructions are to cause the programmable circuitry to obtain a local copy of the AI model, and execute the AI model based on the workload information.
Example 10 includes the non-transitory machine-readable storage medium of example 8, wherein the instructions are to cause the programmable circuitry to transmit the workload information to a model generator and request that the model generator generate the output using the workload information.
Example 11 includes the non-transitory machine-readable storage medium of example 8, wherein the workload information includes system telemetry data that includes at least one of voltage data, temperature data, individual core power data, and multiple core power data.
Example 12 includes the non-transitory machine-readable storage medium of example 8, wherein the AI model is trained by a cloud-based model generator that is separate from the programmable circuitry, and the instructions are to cause the programmable circuitry to tune the AI model.
Example 13 includes the non-transitory machine readable storage medium of example 12, wherein to tune the AI model, the instructions are to cause the programmable circuitry to determine importance of respective features of the AI model, the features associated with a first overclocking performance, and minimize the features of the AI model based on the importance.
Example 14 includes the non-transitory machine readable storage medium of example 13, wherein the instructions are to cause the programmable circuitry to, after performing overclocking on the first compute platform, determine to collect subsequent workload information, the subsequent workload information to adjust the overclocking frequency.
Example 15 includes a method comprising collecting, by executing an instruction with at least one processor, workload information, the workload information representing a workload to be executed by a first compute platform, causing, by executing an instruction with the at least one processor, generation of an output from an AI model based on the workload information, the output representing overclocking frequency value to be used for operation of the first compute platform, and performing, by executing an instruction with a processor, overclocking based on the overclocking frequency value.
Example 16 includes the method of example 15, further including obtaining a local copy of the AI model, and executing the AI model based on the workload information.
Example 17 includes the method of example 15, further including transmitting the workload information to the model generator, and requesting that a model generator generate the output using the workload information.
Example 18 includes the method of example 15, wherein the workload information includes system telemetry data that includes at least one of voltage data, temperature data, individual core power data, and multiple core power data.
Example 19 includes the method of example 15, wherein the AI model is trained by a cloud-based model generation entity, the method further including tuning the AI model.
Example 20 includes the method of example 19, wherein the tuning the AI model includes determining an importance of respective features of the AI model, the features associated with a first overclocking performance, and minimizing the features of the AI model based on the importance.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. An apparatus to perform cloud-based artificial intelligence (AI) overclocking, the apparatus comprising:
interface circuitry;
machine readable instructions; and
programmable circuitry to at least one of instantiate or execute the machine readable instructions to:
collect workload information, the workload information representing a workload to be executed by a first compute platform;
cause generation of an output from an AI model based on the workload information, the output representing an overclocking frequency value to be used for operation of the first compute platform; and
perform overclocking based on the overclocking frequency value.

2. The apparatus of claim 1, wherein to cause generation of the output from the AI model, the programmable circuitry is to:
obtain a local copy of the AI model; and
execute the AI model based on the workload information.

3. The apparatus of any one of claims 1-2, wherein to cause the generation of the output from the AI model, the programmable circuitry is to transmit the workload information to a model generator and request that the model generator generate the output using the workload information.

4. The apparatus of any one of claims 1-3, wherein the workload information includes system telemetry data that includes at least one of voltage data, temperature data, individual core power data, and multiple core power data.

5. The apparatus of any one of claims 1-4, wherein the AI model is trained by model generator circuitry separate from the apparatus, and the programmable circuitry is to tune the AI model.

6. The apparatus of claim 5, wherein to tune the AI model, the programmable circuitry is to:
determine importance of respective features of the AI model, the features associated with a first overclocking performance; and
minimize the features of the AI model based on the importance.

7. The apparatus of any one of claims 1-6, wherein the programmable circuitry is to, after performing overclocking on the first compute platform, determine to collect subsequent workload information, the subsequent workload information to adjust the overclocking frequency value.

8. A machine-readable storage medium comprising instructions to cause programmable circuitry to at least:
collect workload information, the workload information representing a workload to be executed by a first compute platform;
cause generation of an output from an AI model based on the workload information, the output representing overclocking frequency value to be used for operation of the first compute platform; and
perform overclocking based on the overclocking frequency value.

9. The machine-readable storage medium of claim 8, wherein the workload information includes system telemetry data that includes at least one of voltage data, temperature data, individual core power data, and multiple core power data.

10. A method comprising:
collecting workload information the workload information representing a workload to be executed by a first compute platform;
causing generation of an output from an AI model based on the workload information, the output representing overclocking frequency value to be used for operation of the first compute platform; and
performing overclocking based on the overclocking frequency value.

11. The method of claim 10, further including:
obtaining a local copy of the AI model; and
executing the AI model based on the workload information.

12. The method of any one of claims 10-11, further including:
transmitting the workload information to the model generator; and requesting that a model generator generate the output using the workload information.

13. The method of any one of claims 10-12, wherein the AI model is trained by a cloud-based model generation entity, the method further including tuning the AI model.

14. The method of claim 13, wherein the tuning the AI model includes:
determining an importance of respective features of the AI model, the features associated with a first overclocking performance; and
minimizing the features of the AI model based on the importance.

15. A machine readable medium including code, when executed, to cause a machine to perform the method of any one of claims 10-14.
